# FASCICULE DE BREVET EUROPEEN

(11) **EP 2 368 019 B1**
(45) Date de publication et mention de la délivrance du brevet: **06.07.2016**
(21) Numéro de dépôt: 09799073.3
(22) Date de dépôt: 10.12.2009
(51) Int. Cl.: F01D 11/00

(54) **JOINT D'ÉTANCHÉITÉ DE PLATEFORME DE ROTOR DE TURBOMACHINE**
DICHTUNG FÜR EINE PLATTFORM EINES TURBOMASCHINENROTORS
SEAL FOR A TURBOMACHINE ROTOR PLATFORM

(30) Priorité: 12.12.2008 FR 0858539
(43) Date de publication de la demande: 28.09.2011
(73) Titulaire: SNECMA, 75015 Paris (FR)
(72) Inventeur: FORGUE, Jean-Bernard, F-89150 Montacher Villegardin (FR); REGHEZZA, Patrick, Jean-Louis, F-77000 Vaux Le Penil (FR); STOCHMIL, Carole, F-91100 Corbeil Essonnes (FR)
(74) Mandataire: Gevers & Orès
(86) Numéro de dépôt international: PCT/EP2009/066819
(87) Numéro de publication internationale: WO 2010/066833

(56) Documents cités:
- EP-A- 1 046 785
- EP-A- 1 865 154
- GB-A- 2 417 986
- US-B1- 6 634 863

## Description

La présente invention concerne les joints d'étanchéité sur le domaine des turboréacteurs multiflux, notamment à double flux, et plus généralement celui des turbomachines.

Un turboréacteur à double flux comprend un moteur à turbine à gaz parcouru par un flux de gaz désigné flux primaire entraînant une soufflante délivrant un flux d'air, désigné flux secondaire. Lorsque la soufflante est disposée à l'avant du moteur, elle refoule l'air aspiré qui est séparé en deux flux concentriques : l'un le flux primaire l'autre le flux secondaire. L'air du flux primaire est comprimé à nouveau puis mélangé à un carburant dans une chambre de combustion pour produire un flux gazeux à haute énergie qui met en mouvement les turbines disposées en aval. L'une des turbines est reliée par un arbre au rotor de soufflante qu'il entraîne. Le flux secondaire dans les moteurs civils fournit la majorité de la poussée du moteur et le diamètre de la soufflante est par conséquence très important.

Le rotor de soufflante comprend une roue dont le moyeu est solidaire de l'arbre d'entraînement et la jante comprend des alvéoles orientées sensiblement axialement. La direction axiale est celle de l'arbre moteur. Les aubes sont engagées par leur pied dans les alvéoles individuelles, et forment le rotor de soufflante. Une aube de soufflante comprend un pied, une pale de profil aérodynamique et une échasse entre le pied et la pale. Pour constituer la surface frontière entre la jante du rotor et la veine d'air et assurer la continuité de la veine primaire, des plateformes intercalaires sont disposées entre les aubes. Se différentiant des étages supérieurs de compression et en raison des dimensions importantes des aubes, les plateformes du rotor de soufflante ne font pas partie intégrante des aubes mais sont des pièces séparées. Il est à noter que le rayon interne de la veine d'air s'accroit de manière notable entre l'entrée et la sortie du rotor de soufflante.

Un jeu est ménagé entre les plateformes et les aubes pour permettre à ces dernières un débattement limité pendant les différentes phases de fonctionnement du moteur. Ce jeu est colmaté par un joint en matériau élastomère fixé le long des bords latéraux de la plateforme et prenant appui contre l'aube adjacente.

Le joint est, selon l'art antérieur, de forme allongée à profil constant d'une extrémité à l'autre. Transversalement, il est composé de trois parties : une partie d'attache à la platefonne, une partie flexible et une partie renflée conformée de manière à assurer un contact avec la surface de la pièce adjacente. La partie flexible permet une adaptation du joint à la distance séparant le bord de la plateforme de la surface de l'aube en vis-à-vis.

On constate qu'après une certaine durée de fonctionnement de la turbomachine sur laquelle ils sont montés, ils présentent des zones d'usure et de rupture. Il s'ensuit une perte d'étanchéité en pied d'aube de soufflante. Une mauvaise étanchéité a un impact sur le débit et le rendement des étages de compresseur directement en aval de la soufflante. Elle a aussi un impact sur la marge au pompage.

Les joints sont donc des pièces qu'il convient de remplacer régulièrement pendant la vie de la turbomachine pour assurer un fonctionnement optimal de cette dernière.

Un joint d'étanchéité de platefonne de soufflante dans un turboréacteur est décrit dans US 6634863. Ce joint comprend une partie d'attache à la plateforme et une partie de contact de forme allongée, quand il est vue en section transversale.

La présente invention a pour objet d'améliorer la réalisation de l'étanchéité entre les aubes et les plateformes d'un rotor de turbomachine à plateformes intercalaires libres dans le but de réduire la fréquence de remplacement des joints.

La rupture des joints est due aux contraintes résultant des déformations induites par les déplacements relatifs circonférentiels et axiaux entre les plateformes et les aubes pendant les différentes phases de fonctionnement de la turbomachine.

La demanderesse s'est fixé comme objectif de modifier le seul joint sans intervenir sur les pièces du rotor.

L'observation des joints déchirés montre une tendance au retournement dans la partie du joint située en aval de la plateforme. Ce retournement provoque une déformation importante dans une zone de transition avec la partie du joint non retournée. Cette zone est alors le siège de contraintes qui sont susceptibles de conduire à sa rupture localement. L'analyse montre qu'une origine de cette déformation viendrait de la position dans l'espace des joints - ils ne sont pas orientés parallèlement à l'axe moteur mais inclinés fortement en suivant l'augmentation du rayon de la plateforme de l'amont vers l'aval - les contraintes auxquelles les joints sont soumis ne sont pas uniformes sur leur longueur. Les efforts centrifuges sont donc plus importants sur la partie aval que sur la partie amont et engendrent des déformations différentes entre l'amont et l'aval. L'effet est renforcé par un jeu non constant de l'amont vers l'aval entre la plateforme et la surface de l'aube. Le jeu se réduit vers l'aval et la partie renflée du joint est donc poussée, sur la circonférence, vers l'intérieur de la plateforme. On a constaté ainsi que la partie aval du joint était susceptible de venir se plaquer contre la plateforme.

C'est ainsi que l'invention parvient à pallier ces inconvénients avec un joint d'étanchéité de plateforme intercalaire entre deux aubes adjacentes dans un rotor de turbomachine, de forme allongée avec une extrémité amont et une extrémité aval, comprenant, transversalement, dans le sens de la largeur, une partie de contact, une partie d'attache et une partie flexible entre la partie d'attache et la partie de contact. Le joint est caractérisé par le fait que le profil du joint présente une forme à section transversale évolutive entre ses deux extrémités, la section transversale de la partie de contact ayant une forme renflée et diminuant d'une extrémité à l'autre, la partie flexible étant plus étroite que la partie de contact.

En sélectionnant la forme du joint en fonction des contraintes auxquelles il est soumis en fonctionnement de manière à limiter les valeurs maximales des contraintes, on évite les déformations susceptibles d'excéder la limite de rupture du joint.

Le joint est dit à section évolutive quand sa section n'est pas constante d'une extrémité à l'autre. Elle diminue plus particulièrement sur une partie de sa longueur seulement. La forme de la partie de contact est notamment ovale et plus particulièrement circulaire. La partie flexible peut également être évolutive et non constante d'une extrémité à l'autre pour une meilleure adaptation du profil.

On améliore encore la tenue du joint d'étanchéité en chanfreinant au moins une extrémité. Le chanfrein consiste en une coupe du joint en biseau.

L'invention porte également sur une plateforme intercalaire de rotor de turbomachine comprenant un joint d'étanchéité, ainsi défini, au moins le long d'un bord latéral longitudinal.

Conformément à un mode de réalisation particulier, la plateforme est agencée pour être montée axialement sur la jante d'un rotor de manière à présenter, à une extrémité axiale du rotor, un diamètre supérieur à celui de l'autre extrémité. La plateforme est pourvue d'un joint d'étanchéité dont la section la plus faible est du côté à plus grand diamètre.

Plus particulièrement la plateforme étant avec une extrémité axiale amont et une extrémité axiale aval de diamètre supérieur à celui de l'extrémité axiale amont, et le joint présentant une zone amont D et une zone aval E, la zone amont D est de section constante et de longueur comprise entre la moitié et les deux tiers de la longueur du joint, la section transversale de la zone aval E diminuant vers l'aval.

La plateforme est notamment agencée pour être montée sur un rotor de soufflante de turboréacteur.

L'invention porte également sur un rotor de turbomachine comportant lesdites plateformes intercalaires et plus particulièrement sur un rotor de soufflante de turboréacteur.

On décrit ci-après un mode de réalisation de l'invention, à titre d'exemple non limitatif, en référence aux dessins sur lesquels
La figure 1 montre une vue en perspective cavalière, d'une partie d'un rotor de soufflante d'un turboréacteur à double flux.
La figure 2 montre une vue en perspective d'une plateforme avec des joints d'étanchéité latéraux.
La figure 3 représente une section du joint d'étanchéité correspondant à une coupe selon la direction III-III de la figure 2.
La figure 4 montre une simulation de la déformation possible du joint de l'art antérieur,
La figure 5 montre, en perspective, un joint à profil évolutif, conforme à l'invention, avec des coupes selon les directions D-D et E-E.

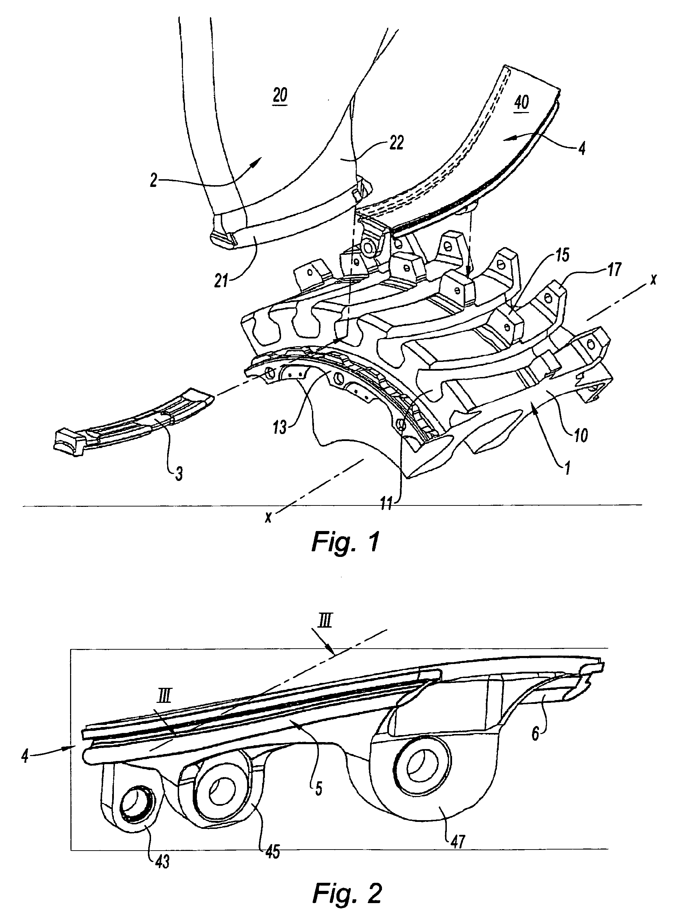

On voit sur la figure 1, en perspective partielle, les éléments constitutifs d'un rotor de soufflante d'un moteur à double flux. Le disque 1 comprend sur sa jante 10 des alvéoles 11, cinq sur la figure, orientées sensiblement axialement par rapport à l'axe du moteur XX. Les alvéoles sont à section en queue d'aronde avec des bords longitudinaux tournés vers l'axe XX. Les aubes sont glissées dans les alvéoles par une extrémité ouverte. On a représenté une aube seule 2 en position pour son introduction dans l'alvéole. L'aube 2 comprend un pied 21, une échasse 22 et une pale 20. Le pied 21 est conformé de manière à venir se loger dans une alvéole 11, avec des renflements latéraux par lesquels il s'appuie, en direction radiale vers l'extérieur, contre les bords longitudinaux de l'alvéole tournés vers l'axe XX. Le pied est maintenu en appui par des cales 3 qui sont glissées au montage, sous le pied 21, le long du fond de l'alvéole 11. Le dispositif de maintien des aubes sur le disque comprend en outre des moyens, ici non représentés, de verrouillage axial des aubes individuellement par rapport au disque.

Les aubes de soufflante ne comportent pas de plateforme intégrée, à la différence des autres aubes de compresseur sur la turbomachine. La fonction est assurée par des plateformes intercalaires, libres, en partie, de mouvement par rapport aux aubes. Une plateforme 4 est représentée sur la figure 1. Le rotor comprend autant de plateformes que d'aubes. Elles sont disposées entre deux aubes adjacentes. Une plateforme 4 comprend une plaque de forme globalement tronconique 40 délimitant la partie de surface radialement intérieure de la veine d'air primaire guidée entre deux aubes adjacentes. Elle est retenue sur le disque en trois points et comporte trois languettes radiales visibles nettement sur la figure 2. La languette amont 43 est percée axialement et fixée par une clavette non représentée à une bride amont 13 sur la face amont du disque. Une languette intermédiaire 45, radiale également, est retenue par une clavette non représentée à une languette 15 radiale positionnée sur la jante du disque entre deux alvéoles. La troisième languette 47 est liée au tambour du compresseur immédiatement aval, désigné communément « booster » et non représenté. La languette 17 porte la liaison disque / booster. Les clavettes sont orientées selon l'axe XX et permettent à la plateforme d'être retenues à la fois axialement et radialement.

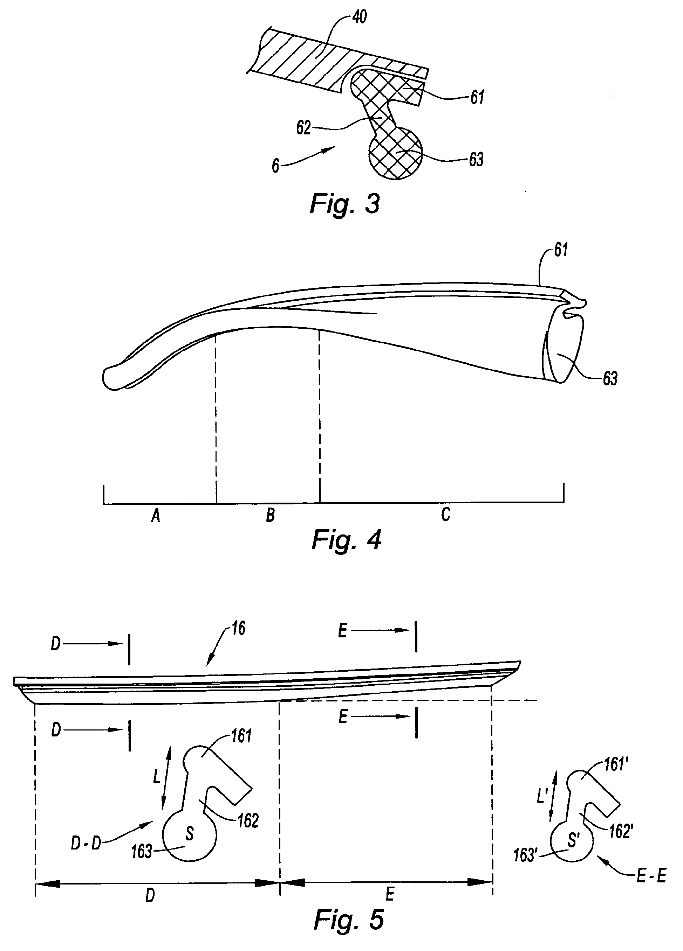

Afin d'assurer l'étanchéité entre la veine et le volume intérieur du rotor, des joints 5 et 6 en matériau élastomère sont disposés le long des plateformes. Un joint est montré sur la figure 3 qui est une coupe transversale selon la direction III-III. Le joint 6 est en trois parties : une partie d'attache 61, une partie de liaison flexible 62 et une partie de contact 63. Le joint est rendu solidaire de la plateforme par adhérisation de la partie d'attache 61 dans une rainure ménagée le long du bord latéral de la plaque 40 formant la plateforme. La partie de contact est de préférence à section renflée, ovale ou circulaire de préférence. Sa forme assure un bon contact tangentiel avec la pièce voisine, mais aussi elle donne de la raideur au joint et lui confère de l'inertie pour un appui satisfaisant. La partie de liaison 62 est plus étroite que la partie de contact et est flexible pour permettre au joint de s'adapter. Comme on le voit sur la figure 3, la partie de contact s'étend au-delà du bord de la platefonne pour venir au contact de la surface adjacente de l'aube.

Lorsque le joint est de forme constante sur toute sa longueur, on constate qu'il se déforme de façon non homogène. Les déformations créent des contraintes qui engendrent des ruptures dommageables pour l'étanchéité.

La figure 4 représente une simulation des déformations qu'est susceptible de subir le joint en fonctionnement. On distingue trois zones. Une première zone A, est située sur la partie amont de la plateforme, où la forme du joint correspond à celle attendue lorsqu'il est en place sur la plateforme et en appui extérieur contre l'échasse de l'aube adjacente. Dans la zone C, le joint est retourné ; la partie de contact 63 au lieu d'être en appui extérieur est rabattue contre la plateforme sous celle-ci. Cette position, non souhaitée, est due aux efforts centrifuges combinés aux efforts latéraux exercés par l'échasse. La zone B intermédiaire entre les zones A et C subit une déformation maximale et est le siège des ruptures.

La solution de l'invention consiste à faire évoluer le profil du joint pour tenir compte de la non-uniformité des efforts auxquels il est soumis.

La figure 5 représente, à la fois dans le sens de la longueur et en section transversale, un tel joint 16 à profil évolutif.

Le joint est, comme dans l'art antérieur, à section transversale en trois parties d'une extrémité à l'autre. Il comprend une partie d'attache, une partie flexible et une partie de contact.

On distingue dans le sens de sa longueur, l'extrémité amont et l'extrémité aval ; l'amont et l'aval correspondent aux extrémités de la plateforme sur lequel le joint est destiné à être placé. Entre ces deux extrémités, le joint comprend deux zones, D et E respectivement. Dans la zone D, amont, le profil reste constant et correspond à celui de la coupe D-D, avec une partie d'attache 161 pour être collée à la rainure correspondante de la platefonne, une partie flexible 162 de largeur L entre la partie d'attache et la partie de contact, et une partie de contact 163 de section ici circulaire dont la surface est S.

La longueur de la zone D est sensiblement comprise entre la moitié et les deux tiers de la longueur du joint.

Dans la zone E, à l'aval de la zone D, le profil n'est pas constant. La section transversale selon la coupe E-E du joint montre une partie d'attache 161', de même forme et dimension que la partie d'attache 161. La partie flexible 162' est de largeur L' <L. La partie de contact 163' a une section également circulaire mais dont la surface S' est plus petite que la surface S. En réduisant la largeur et/ou la section de la partie de contact, l'inertie du joint est réduite. Les efforts tendant au retournement du joint dans cette partie sont également réduits. En procédant à des essais avec le joint ainsi modifié, on n'a constaté aucune défonnation dommageable pour l'intégrité du joint.

De préférence la zone de raccordement entre la partie flexible et la partie de contact est arrondie et ne présente pas d'arête, de façon à réduire les risques d'amorce de rupture.

On a décrit un exemple de réalisation correspondant au cas d'un rotor de soufflante de turboréacteur à double flux. Dans ce cas, le rayon intérieur de la veine primaire subit une variation importante entre l'entrée et la sortie de la veine. En outre le jeu entre la plateforme et l'aube n'est pas constant non plus, il se réduit entre l'amont et l'aval.

L'invention s'applique de façon plus générale à toute turbomachine présentant une disposition similaire.

## Revendications

1. Joint d'étanchéité (16) de plateforme (4) intercalaire entre deux aubes adjacentes dans un rotor de turbomachine, de forme allongée avec une extrémité amont et une extrémité aval, comprenant transversalement, dans le sens de la largeur, une partie de contact (163,163') une partie d'attache (161, 161') et une partie flexible (162, 162') entre la partie d'attache et la partie de contact, sa section transversale présentant une forme évolutive entre ses deux extrémités, **caractérisé en ce que** la section transversale de la partie de contact a une forme renflée diminuant d'une extrémité à l'autre, la partie flexible étant plus étroite que la partie de contact.

2. Joint d'étanchéité (16) selon la revendication 1, dont la section transversale de la partie de contact a une forme ovale et plus particulièrement circulaire.

3. Joint d'étanchéité 16 selon l'une des revendications précédentes dont au moins une extrémité amont ou aval est chanfreinée.

4. Plateforme (4) intercalaire de rotor de turbomachine comprenant un joint d'étanchéité (16) selon l'une des revendications précédentes au moins le long d'un bord latéral longitudinal.

5. Plateforme (4) selon la revendication précédente, agencée pour être montée axialement sur la jante d'un rotor de manière à présenter à une extrémité axiale un diamètre supérieur à celui de l'autre extrémité axiale, le joint d'étanchéité ayant la section la plus faible du côté à plus grand diamètre.

6. Plateforme (4) selon la revendication précédente avec une extrémité axiale amont et une extrémité axiale aval de diamètre supérieur à celui de l'extrémité axiale amont, le joint présentant une zone amont (D) et une zone aval (E), la zone amont (D) étant de section constante et de longueur comprise entre la moitié et les deux tiers de la longueur du joint, la section transversale de la zone aval (E) diminuant vers l'aval.

7. Plateforme (4) selon la revendication précédente, agencée pour être montée sur un rotor de soufflante de turboréacteur.

8. Rotor de turbomachine comportant des plateformes intercalaires selon l'une des revendications 6 à 7.

9. Rotor selon la revendication précédente dont la turbomachine est la soufflante d'un turboréacteur.

## Patentansprüche

1. Dichtung (16) einer Zwischen-Plattform (4) zwischen zwei angrenzenden Schaufeln in einem Rotor einer Turbomaschine, länglicher Form, mit einem oberen und einem unteren Ende, umfassend in Querrichtung und in Längsrichtung ein Kontaktelement (163, 163'), ein Befestigungselement (161, 161') und ein flexibles Element (162, 162') zwischen dem Befestigungselement und dem Kontaktelement, wobei der Querschnitt zwischen den beiden Enden eine evolutive Form aufweist, **dadurch gekennzeichnet, dass** der Querschnitt des Kontaktelements eine ausgebuchtete Form besitzt, die von einem Ende zum anderen schwindet, wobei das flexible Element enger ist als das Kontaktelement.

2. Dichtung (16) gemäß Anspruch 1, deren Längsschnitt des Kontaktelements eine ovale Form besitzt und insbesondere kreisförmig ist.

3. Dichtung (16) gemäß einem beliebigen der vorstehenden Ansprüche, wo mindestens eines des oberen oder unteren Endes angefast ist.

4. Zwischen-Plattform (4) eines Rotors einer Turbomaschine, umfassend eine Dichtung (16) gemäß einem beliebigen der vorstehenden Ansprüche, mindestens entlang eines länglichen Seitenrands.

5. Plattform (4) gemäß dem vorstehenden Anspruch, angeordnet, um axial auf die Felge eines Rotors montiert zu werden, derart, dass sie an einem axialen Ende einen größeren Durchmesser aufweist ä als der am anderen axialen Ende, wobei die Dichtung mit dem kleineren Querschnitt auf der Seite mit dem größeren Durchmesser angeordnet wird.

6. Plattform (4) gemäß dem vorstehenden Anspruch mit einem axialen Ende oberhalb und einem axialen Ende unterhalb mit dem größeren Durchmesser als der des axialen Endes oberhalb, wobei die Dichtung einen Bereich oberhalb (D) und einen Bereich unterhalb (E) aufweist, wobei der Bereich oberhalb (D) eines konstanten Querschnitts ist und einer Länge zwischen der Hälfte und zwei-Drittel der Länge der Dichtung, wobei der Querschnitt des Bereichs unterhalb (E) nach oben schwindet.

7. Plattform (4) gemäß dem vorstehenden Anspruch, angeordnet, um auf einen Gebläserotor einer Turbomaschine montiert zu werden.

8. Rotor einer Turbomaschine, umfassen Zwischen-Plattformen gemäß einem der Ansprüche 6 bis 7.

9. Rotor gemäß dem vorstehenden Anspruch, dessen Turbomaschine ein Gebläserotor einer Turbomaschine ist.

## Claims

1. A seal (16) for an intermediate platform (4) between two adjacent blades in a rotor of a turbine engine, said seal being of elongate shape with an upstream end and a downstream end, comprising transversely, widthwise, a contact portion (163, 163') an attachment portion (161,161') and a flexible portion (162,162') between the attachment portion and the contact portion, the cross section of said seal having a changing shape between its two ends, **characterized in that** the cross section of the contact portion has a bulbous shape reducing from one end to the other, said flexible portion being narrower than said contact portion.

2. The seal (16) as claimed in claim 1, wherein the cross section of the contact portion has an oval and more particularly circular shape.

3. The seal (16) as claimed in one of the preceding claims, wherein at least one upstream end or downstream end is tapered.

4. An intermediate platform (4) of a turbine-engine rotor comprising a seal (16) as claimed in one of the preceding claims at least along one longitudinal lateral edge.

5. The platform (4) according to the preceding claim arranged so as to be mounted axially onto the rim of a rotor so as to have at one axial end a diameter that is greater than that of the other axial end, the seal having the smallest cross section on the side of larger diameter.

6. The platform (4) as claimed in the preceding claim, with an upstream axial end and a downstream axial end with a diameter greater than that of the upstream axial end, the seal having an upstream zone (D) and a downstream zone (E), the upstream zone (D) having a constant section and a length of between half and two thirds of the length of the seal, the cross section of the downstream zone (E) reducing in the downstream direction.

7. The platform (4) as claimed in the preceding claim, arranged to be mounted on a fan rotor of a turbojet.

8. A turbine-engine rotor comprising intermediate platforms as claimed in one of claims 6 to 7.

9. The rotor according to the preceding claim, the turbine engine of which being the fan of a turbojet.
